# EUROPEAN PATENT APPLICATION

(11) **EP 2 552 144 A1**
(43) Date of publication of application: **30.01.2013**
(21) Application number: 11856591.0
(22) Date of filing: 03.11.2011
(51) Int. Cl.: H04W 16/14

(54) **METHOD AND NETWORK DEVICE FOR SHARING SPECTRUM BETWEEN AN OFDM SMALL BASE STATION AND AN HETEROGENEOUS SYSTEM NETWORK**

(30) Priority: 20.01.2011 CN 201110023316
(71) Applicant: Huawei Technologies Co., Ltd., Shenzhen, Guangdong 518129 (CN)
(72) Inventor: LIU, Guang, Shenzhen Guangdong 518129 (CN); XIA, Linfeng, Shenzhen Guangdong 518129 (CN); CHEN, Fang, Shenzhen Guangdong 518129 (CN)
(74) Representative: Körber, Martin Hans
(86) International application number: PCT/CN2011/081747
(87) International publication number: WO 2012/097625

(57) **Abstract**

Embodiments of the present invention provide a method and a network device for frequency spectrum sharing between an OFDM small cell and another system network. The method includes: determining, by an OFDM small cell, available frequencies, where the available frequencies are determined according to frequency usage information of another system network coexisting with the OFDM small cell; determining, by the OFDM small cell, a usage mode of the available frequencies; and notifying, by the OFDM small cell, a terminal served by the OFDM small cell of information about the available frequencies and the usage mode. Through the embodiments of the present invention, the frequency spectrum sharing between the OFDM small cell and the other system network can be achieved.

## Description

### FIELD OF THE INVENTION

The present invention relates to mobile communications technologies, and in particular, to a method and a network device for frequency spectrum sharing between an OFDM small cell and another system network.

### BACKGROUND OF THE INVENTION

In the co-construction of a multi-RAT network, to solve the problems of the insufficiency of frequency spectrum resources of a long term evolution (Long Term Evolution, LTE) system and how to implement the smooth transition of a radio system, a solution may be adopted, in which the global system for mobile communications (Global System for Mobile communications, GSM) and the LTE system dynamically share frequency spectrum resources of the GSM system, which is called GL frequency spectrum sharing for short. When the GL frequency spectrum sharing is intended for an LTE macro eNodeB and a GSM system, part of bandwidth in frequency spectra of the GSM network may be allocated to the LTE system for use.

With the development of mobile broadband technologies, more and more small cells are deployed on a massive scale in the LTE system. These small cells include MICRO eNodeBs, PICO eNodeBs, Relay eNodeBs, and home eNodeBs (HeNB). Taking an LTE HeNB as an example, because indoor data services that need to be supported are growing increasingly, available frequency bands are becoming insufficient. Meanwhile, the interference between an LTE HeNB and an LTE macro eNodeB is also a key problem that needs to be solved. Therefore, it is worth thinking how to solve these problems by using frequency spectrum sharing technologies.

The frequency spectrum sharing between a small cell and a GSM system may also use the method of the frequency spectrum sharing between the LTE macro eNodeB and the GSM system. However, the method is disadvantageous in that the GSM system needs to be adjusted, such as frequencies available to a GSM macro eNodeB. How to achieve the sharing between the small cell and the GSM system without affecting the GSM system is a problem to be solved.

### SUMMARY OF THE INVENTION

Embodiments of the present invention provide a method and a network device for frequency spectrum sharing between an OFDM small cell and another system network, so as to achieve the frequency spectrum sharing between the OFDM small cell and the other system network.

An embodiment of the present invention provides a method for frequency spectrum sharing between an OFDM small cell and another system network, including:
determining, by an OFDM small cell, available frequencies, where the available frequencies are determined according to frequency usage information of another system network coexisting with the OFDM small cell;
determining, by the OFDM small cell, a usage mode of the available frequencies; and
notifying, by the OFDM small cell, a terminal served by the OFDM small cell of information about the available frequencies and the usage mode.

An embodiment of the present invention provides a network device, including:
a first determining module, configured to determine available frequencies, where the available frequencies are determined according to frequency usage information of another system network coexisting with the OFDM small cell;
a second determining module, configured to determine a usage mode of the available frequencies; and
a sending module, configured to notify a terminal served by the OFDM small cell of information about the available frequencies and the usage mode.

It can be known from the foregoing technical solutions that, in the embodiments of the present invention, an OFDM small cell obtains available frequencies, and the available frequencies are determined according to frequency usage information of another system network coexisting with the OFDM small cell, so that the frequency spectrum sharing between the OFDM small cell and the other system network can be achieved, thereby fully utilizing frequency spectrum resources, and reducing the interference on the other system network.

### BRIEF DESCRIPTION OF THE DRAWINGS

To describe the technical solutions according to the embodiments of the present invention more clearly, accompanying drawings for describing the embodiments are introduced briefly in the following. Apparently, the accompanying drawings in the following description are some embodiments of the present invention, and a person skilled in the art may further obtain other drawings according to the accompanying drawings without creative efforts.

FIG. 1 is a schematic flowchart of a method according to a first embodiment of the present invention;

FIG. 2 is a schematic flowchart of a method according to a second embodiment of the present invention;

FIG. 3 is a schematic diagram illustrating a usage mode based on frequency spectrum blocks according to an embodiment of the present invention;

FIG. 4 is a schematic diagram illustrating a usage mode based on frequency spectrum sub-blocks according to an embodiment of the present invention;

FIG. 5 is a schematic flowchart of a method according to a third embodiment of the present invention;

FIG. 6 is a schematic flowchart of a method according to a fourth embodiment of the present invention; and

FIG. 7 is a schematic structural diagram of a network device according to a fifth embodiment of the present invention.

### DETAILED DESCRIPTION OF THE EMBODIMENTS

In order to make the objectives, technical solutions, and advantages of the present invention more comprehensible, the technical solutions according to the embodiments of the present invention are clearly and completely described in the following with reference to the accompanying drawings. Apparently, the embodiments to be described are merely a part rather than all of the embodiments of the present invention. All other embodiments obtained by a person skilled in the art based on the embodiments of the present invention without creative efforts shall fall within the protection scope of the present invention.

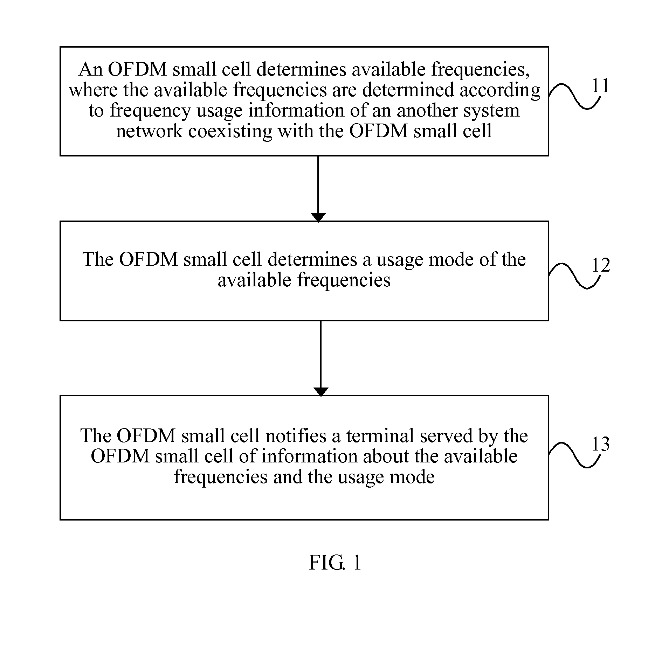

FIG. 1 is a schematic flowchart of a method according to a first embodiment of the present invention, including:

Step 11: An orthogonal frequency division multiple (Orthogonal Frequency Division Multiple, OFDM) small cell determines available frequencies, where the available frequencies are determined according to frequency usage information of another system network coexisting with the OFDM small cell.

The OFDM small cell includes, but is not limited to, a small cell of an LTE system, such as an LTE HeNB, an LTE relay, an LTE PICO, and an LTE Backhaul, or a small cell of a worldwide interoperability for microwave access (Worldwide Interoperability for Microwave Access, WiMAX) system, such as a WiMAX PICO and a WiMAX Femto.

The other system network co-existing with the OFDM small cell may be any system different from the small cell, including, but not limited to, a GSM network, a WiMAX network, and an LTE network.

An LTE HeNB and a GSM macro eNodeB are taken as an example in the following embodiment of the present invention. For scenarios of the sharing between other systems or other types of small cell and another system system network, except that the specific content of obtained information may be different, the steps and methods may refer to the example.

The available frequencies may be determined by the OFDM small cell according to the obtained frequency usage information of the other system network, or the OFDM small cell directly obtains the set of available frequencies from a frequency spectrum information center.

When the OFDM small cell obtains the frequency usage information of the other system network, the OFDM small cell may obtain the frequency usage information from pre-configured information or from a network management system; or obtain the frequency usage information from a frequency spectrum information center; or obtain the frequency usage information by communicating with a macro eNodeB of the other system network.

The frequency usage information may be a frequency usage status of all GSM base stations, or a frequency usage status of adjacent GSM base stations surrounding the small cell.

When available frequencies of the small cell are directly designated by the frequency spectrum information center, the small cell does not need to perform any detection and directly uses the available frequencies; otherwise, available frequencies are obtained by using the following methods:

For a non-frequency hopping mode or a baseband frequency hopping mode: determining that all frequencies used by the other system network is a set of preliminarily available frequencies; scanning all frequencies or only broadcasting channel frequencies in the set of preliminarily available frequencies; or scanning all frequencies or only broadcasting channel frequencies used by a macro eNodeB covering the OFDM small cell and a macro eNodeB adjacent to the macro eNodeB; and measuring a reception level, and obtaining an edge reception level of the OFDM small cell according to the reception level, so as to determine a set of unavailable frequencies; where the set of unavailable frequencies is a set of frequencies when the edge reception level of the OFDM small cell is greater than an edge coverage level of the macro eNodeB. Unavailable frequencies are deleted from the set of preliminarily available frequencies to obtain available frequencies of the OFDM small cell.

For a radio frequency hopping mode: Because a set of frequencies used by each macro eNodeB changes at each frequency hopping time point, available frequencies need to be updated at each frequency hopping time point. The method is: at an initial frequency hopping time point, scanning all frequencies or only broadcasting channel frequencies in a set of preliminarily available frequencies; or scanning all frequencies or only broadcasting channel frequencies used by a GSM macro eNodeB covering the OFDM small cell and a GSM macro eNodeB adjacent to the GSM macro eNodeB; measuring a reception level; and obtaining an edge reception level of the OFDM small cell according to the reception level, so as to determine a set of unavailable frequencies; where the set of unavailable frequencies is a set of frequencies when the edge reception level of the OFDM small cell is greater than an edge coverage level of the macro eNodeB. All GSM cells including a set of unavailable frequencies are related cells. At a frequency hopping time point after the initial frequency hopping time point, a set of frequencies used by the related cells is determined according to obtained frequency information of the GSM system; and the set of frequencies used by the related cells is deleted from all available frequencies of the GSM system, so as to obtain a set of available frequencies of the small cell at the frequency hopping time point.

The foregoing frequency hopping modes and information about frequencies used at each time point may be determined according to obtained frequency usage information of the other system network. The frequency usage information includes information about frequencies that are used, a frequency hopping mode, and a frequency hopping sequence, where the information about frequencies that are used refers to frequencies used when the non-frequency hopping mode or the baseband frequency hopping mode is adopted, the frequency hopping sequence refers to frequencies used at different frequency hopping time points when the radio frequency hopping mode is adopted, and the frequency hopping mode refers to adopting the non-frequency hopping mode, the baseband frequency hopping mode, or the radio frequency hopping mode.

Step 12: The OFDM small cell determines a usage mode of the available frequencies.

For example, it is determined that a usage mode based on frequency spectrum blocks or a usage mode based on frequency spectrum sub-blocks is adopted. A usage mode may be set according to actual requirements, and corresponding processing is performed according to the set usage mode. Specifically, if it is set that the usage mode based on frequency spectrum blocks is adopted, a protection band is set at two sides of the unavailable frequencies in a frequency spectrum block, where the protection band is not configured to transmit data of the LTE system; or, a filter is set at the unavailable frequencies in the frequency spectrum block, so that data transmitted through the unavailable frequencies is filtered out. If it is set that the usage mode based on frequency spectrum sub-blocks is adopted, data is transmitted in a unit of a frequency spectrum sub-block, where the sub-block data is consecutive frequency spectrum sub-blocks left after unavailable frequencies are removed from a frequency spectrum block. The small cell may use one or more of the sub-blocks, or use the sub-blocks in a carrier aggregation (CA) manner.

Step 13: The OFDM small cell notifies a terminal served by the OFDM small cell of information about the available frequencies and the usage mode.

The available frequencies and the usage mode are used to achieve communication between the OFDM small cell and the terminal.

For example, the terminal is notified through a system broadcast message or a resource scheduling message. The terminal includes, but is not limited to, a mobile phone, a relay node, or other eNodeBs.

In this embodiment, an OFDM small cell obtains available frequencies, and the available frequencies are determined according to frequency usage information of a heterogeneous network coexisting with the OFDM small cell, so that the frequency spectrum sharing between the OFDM small cell and the heterogeneous network can be achieved, thereby fully utilizing frequency spectrum resources, and reducing the interference on the heterogeneous network.

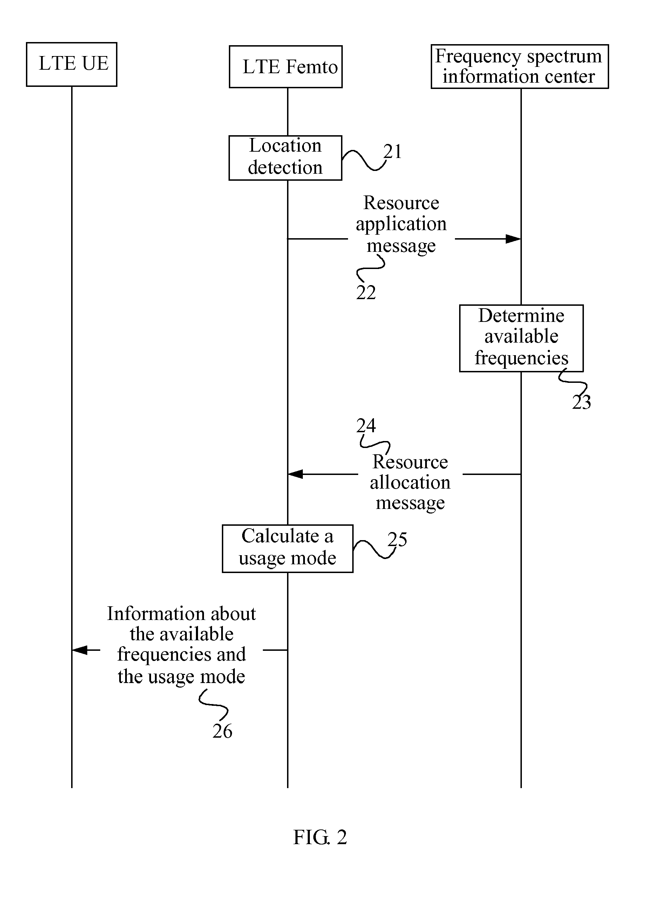

FIG. 2 is a schematic flowchart of a method according to a second embodiment of the present invention, where centralized allocation is taken as an example in this embodiment. Referring to FIG. 2, this embodiment includes:

Step 21: An LTE HeNB performs location detection.

The location detection includes detecting location information of the LTE HeNB, for example, determining the location information by using the global positioning system (Global Positioning System, GPS), or confirming the location information by using a backhaul port.

Step 22: The LTE HeNB sends a resource application message to a frequency spectrum information center, where the resource application message includes the location information of the LTE HeNB.

Step 23: The frequency spectrum information center determines available frequency information of the LTE HeNB.

The frequency spectrum information center may designate available frequency information for each LTE HeNB, or obtain available frequency information designated for each LTE HeNB from a database, or calculate according to frequency usage information of a macro eNodeB, where, for the calculation process, refer to the following embodiment.

Step 24: The frequency spectrum information center sends a resource allocation message to an LTE Femto, where the resource allocation message includes the available frequency information.

If a non-frequency hopping mode or a baseband frequency hopping mode is used, the frequency spectrum information center may send the available frequency information for one time only, and the LTE HeNB performs subsequent processing according to the available frequencies. If a frequency hopping mode is adopted, the frequency spectrum information center needs to notify the HeNB of a frequency hopping sequence of a related GSM eNodeB, so that the LTE HeNB performs subsequent processing after updating the available frequencies.

Step 25: The LTE HeNB determines a usage mode of the available frequencies.

The usage mode may be a mode based on blocks or sub-blocks. Details are as follows:

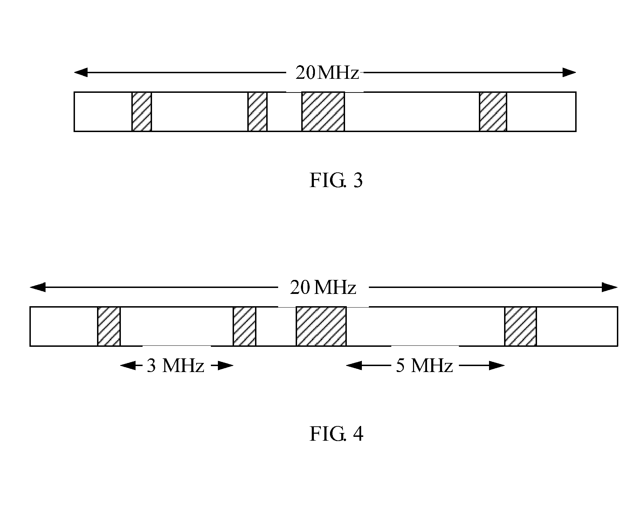

FIG. 3 is a schematic diagram illustrating a usage mode based on frequency spectrum blocks according to an embodiment of the present invention. Referring to FIG. 3, if the total bandwidth of the GSM is 20 MHz, the HeNB uses bandwidth in a mode of 20 MHz bandwidth. However, the bandwidth of 20 MHz includes unavailable frequencies. In FIG. 3, the filling parts indicate unavailable frequencies. The unavailable frequencies may be processed by using the following modes:

Mode 1: A protection band is set at two sides of each unavailable 200KHz carrier (it is assumed that each unavailable frequency has a bandwidth of 200 KHz). The protection band does not bear any LTE data. According to theoretical analysis, the bandwidth of the protection band equals to 1-2 resource blocks (Resource Block, RB).

Mode 2: An auxiliary filter is added, for example, to ensure that the interference on frequencies used by the GSM meets requirements in a filter bank multi-carrier (Filter Bank Multi-Carrier, FBMC) mode.

FIG. 4 is a schematic diagram illustrating a usage mode based on frequency spectrum sub-blocks according to an embodiment of the present invention. Referring to FIG. 4, for example, the total bandwidth of the GSM is 20 MHz, and the bandwidth of 20 MHz includes unavailable frequencies. In FIG. 4, the filling parts indicate unavailable frequencies, and the parts among the unavailable frequencies are available frequencies. Each unavailable frequency forms different bandwidth, for example, 5 MHz and 3 MHz. At this time, the HeNB uses the frequencies by using a multi-carrier mode. At this time, the interference on the GSM eNodeB is small, for example, the frequency spectra are used in a unit of 5 MHz or 3 MHz. In the mode, when the HeNB is located at the center of a cell, a GSM cell affected by the HeNB is only the GSM eNodeB covered by the HeNB, and the available frequencies of the HeNB are all frequencies except the frequencies used by the GSM eNodeB. When the HeNB is located at edges of two or three cells, the number of available frequency spectra becomes smaller, because the amount of interference frequencies increases.

Step 26: The LTE HeNB notifies a UE of information about the available frequencies and the usage mode.

For example, the UE may be notified of information about a location, a size, and a usage mode of shared frequency bands through a system broadcast message.

Or when the HeNB performs resource scheduling, it should be avoided that resource blocks allocated to users include unavailable frequencies.

For a scenario in which the GSM uses the frequency hopping mode, the HeNB just needs to broadcast information about the location and size of the shared frequencies, or the UE is prevented from using unavailable frequencies through scheduling. Therefore, it is not required to notify a set of available frequencies in real time.

In this embodiment, the LTE HeNB obtains available frequencies from the frequency spectrum information center, and the available frequencies are determined by the frequency spectrum information center according to the frequency usage information of the macro eNodeB coexisting with the LTE HeNB, so that the frequency spectrum sharing between the LTE HeNB and the GSM macro eNodeB can be achieved, thereby fully utilizing frequency spectrum resources, and reducing the interference on the GSM macro eNodeB. Moreover, because the available frequencies are calculated by the frequency spectrum information center, centralized management can be achieved.

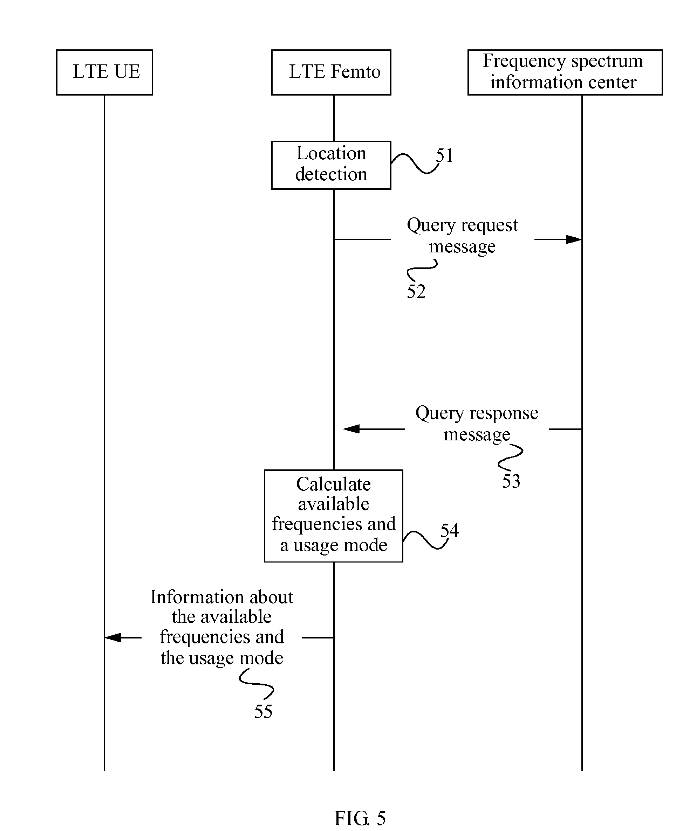

FIG. 5 is a schematic flowchart of a method according to a third embodiment of the present invention, where distributed allocation is taken as an example in this embodiment. As shown in FIG. 5, this embodiment includes:

Step 51: An LTE HeNB performs location detection.

The location detection includes detecting location information of the LTE HeNB, for example, determining the location information by using the GPS, or confirming the location information by using a backhaul port.

Step 52: The LTE HeNB sends a query request message to a frequency spectrum information center to query information about all frequencies of the GSM system and frequency usage information of a macro eNodeB covering the LTE HeNB and a macro eNodeB adjacent to the macro eNodeB. The frequency usage information includes: information about frequencies that are used, a frequency hopping sequence, and a frequency hopping mode, where the information about frequencies that are used refers to frequencies used when a non-frequency hopping mode or a baseband frequency hopping mode is adopted, the frequency hopping sequence refers to frequencies used at different frequency hopping time points when a radio frequency hopping mode is adopted, and the frequency hopping mode refers to adopting the non-frequency hopping mode, the baseband frequency hopping mode, or the radio frequency hopping mode.

Alternatively, the frequency usage information may be obtained from a network management system or other management entities, or the frequency usage information may be obtained by communicating with a macro eNodeB.

Step 53: The frequency spectrum information center returns the frequency usage information to the small cell.

The frequency spectrum information center may use the following mode to obtain the frequency usage information and send the information to the small cell: the frequency spectrum information center forwards the query request message to a database.

The database returns, to the frequency spectrum information center, a query response carrying the frequency usage information.

The frequency spectrum information center forwards the frequency usage information to the LTE HeNB.

Step 54: The LTE HeNB calculates available frequencies allocated to the LTE HeNB and a usage mode.

For example, Mode 1: The GSM eNodeB is in a non-frequency hopping mode or a baseband frequency hopping mode. In this mode, frequencies used by each carrier of the GSM eNodeB are fixed.

First, it is determined that all frequencies of all GSM systems are preliminarily available frequencies.

Secondly, the LTE HeNB scans all frequencies or only broadcasting channel frequencies of a GSM macro eNodeB covering the LTE HeNB and a macro eNodeB adjacent to the GSM macro eNodeB, and measures a reception level P1, and obtains an edge reception level P2 of the LTE HeNB according to the reception level P1 (P1-P<P2<P1+P, where P is a conversion constant of indoor path loss). When the upper edge (that is, P1+P) of P2 exceeds a GSM edge coverage level (the GSM edge coverage level is a fixed value, which is usually -102dBm in engineering), it indicates that an edge user of the LTE HeNB may be in the coverage range of the GSM eNodeB. Therefore, the corresponding frequency is an unavailable frequency, and the frequency needs to be deleted from the set of available frequencies.

After the frequencies of the eNodeB are scanned, the obtained set of frequencies is a set of available frequencies of the eNodeB. That is, the set of available frequencies = {Set of total frequencies} - {Frequencies of the GSM eNodeB covering the LTE HeNB + Frequencies of a GSM adjacent cell whose frequency evaluation power exceeds a threshold}. The set of total frequencies is a set of frequencies available to the GSM system; the GSM macro eNodeB covering the LTE HeNB refers to a GSM macro eNodeB whose coverage range includes the location where LTE HeNB is located. Because the non-frequency hopping mode or baseband frequency hopping mode is used, the frequencies are fixed on a time axis. The GSM adjacent cell whose frequency power is greater than a threshold refers to a GSM adjacent cell where the foregoing P1+P is greater than a preset threshold.

In view of variations of the conditions, the measurement may be performed periodically.

Definitely, the foregoing measurement may also be performed through a user equipment (User Equipment, UE) served by the LTE HeNB. At this time, the deleted frequencies are those when P1 exceeds the coverage level of the GSM, and the UE notifies the LTE HeNB of information about the determined available frequencies.

Mode 2: The GSM eNodeB is in a frequency hopping mode, and when the GSM performs frequency hopping, an occupied frequency continuously changes with time. Therefore, the set of frequencies available to the LTE HeNB also continuously changes. Considering that the measurement consumes time, in this case, the set of available frequencies of the LTE HeNB may be obtained by using the following modes:

First, a set of frequencies available at an initial time point is obtained by using the method in Mode 1. That is, available frequencies = {Set of total frequencies} - {Initial frequencies of the GSM macro eNodeB covering the LTE HeNB + Frequencies used by a GSM adj acent cell whose frequency evaluation power exceeds (is greater than or equal to) a threshold}. Related adjacent cells are determined, where the related adjacent cells = {GSM adjacent cells whose frequency evaluation power exceeds a threshold}.

Secondly, in each of subsequent frequency hopping time points, the set of available frequencies is obtained by using the following method: {Set of available frequencies} = {Set of total frequencies} - {Frequencies used by the GSM macro eNodeB covering the LTE HeNB at the time point + Frequencies used by related adjacent cells at the time point}. Because the frequency hopping sequences of the macro eNodeBs are obtained in the foregoing steps, a set of frequencies used by the macro eNodeBs at any time point may be calculated.

For the calculation of the usage mode, refer to step 25.

Step 55: The LTE HeNB notifies the UE of information about the available frequencies and the usage mode.

For details, refer to step 26.

In this embodiment, the LTE HeNB obtains available frequencies from the frequency spectrum information center, and the available frequencies are determined by the frequency spectrum information center according to the frequency usage information of the macro eNodeB coexisting with the LTE HeNB, so that the frequency spectrum sharing between the LTE HeNB and the GSM macro eNodeB can be achieved, thereby fully utilizing frequency spectrum resources, and reducing the interference on the GSM macro eNodeB. Moreover, because the available frequencies are calculated by the LTE HeNB, distributed management can be achieved, thereby reducing the load of the frequency spectrum information center.

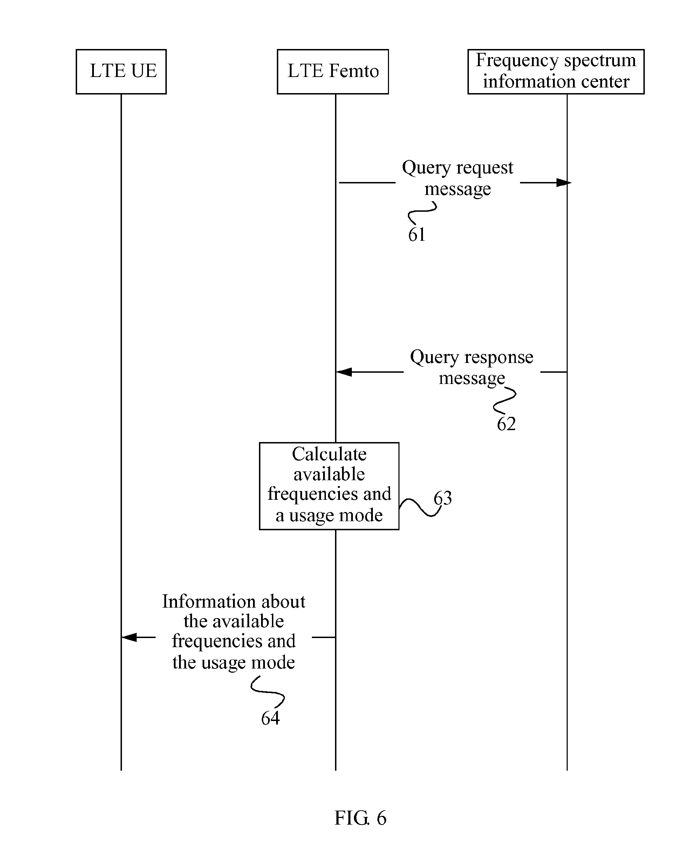

FIG. 6 is a schematic flowchart of a method according to a fourth embodiment of the present invention, including:

Step 61: An LTE HeNB sends a query request message to a frequency spectrum information center to query all frequency usage information of a GSM system. The frequency usage information includes information about frequencies that are used, a frequency hopping sequence, and a frequency hopping mode, where the information about frequencies used refers to frequencies used when a non-frequency hopping mode or a baseband frequency hopping mode is adopted, the frequency hopping sequence refers to frequencies that are used at different frequency hopping time points when a radio frequency hopping mode is adopted, and the frequency hopping mode refers to adopting the non-frequency hopping mode, the baseband frequency hopping mode, or the radio frequency hopping mode.

Alternatively, the frequency usage information may be obtained from a network management system or other management entities, or the frequency usage information may be obtained by communicating with a macro eNodeB.

Step 62: The frequency spectrum information center returns the frequency usage information to the LTE HeNB.

The frequency spectrum information center may use the following mode to obtain the frequency usage information and send the information to the small cell: the frequency spectrum information center forwards the query request message to a database.

The database returns, to the frequency spectrum information center, a query response carrying the foregoing frequency usage information.

The frequency spectrum information center forwards the foregoing frequency usage information to the LTE HeNB.

Step 63: The LTE HeNB calculates available frequencies allocated to the LTE HeNB and a usage mode.

Different from the third embodiment, the LTE HeNB determines unavailable frequencies according to all frequencies or broadcasting frequencies used by all the GSM macro eNodeBs. For other calculation modes, refer to step 54.

Step 64: The LTE HeNB notifies a UE of information about the available frequencies and the usage mode.

For details, refer to step 26.

In this embodiment, the LTE HeNB obtains available frequencies from the frequency spectrum information center, and the available frequencies are determined by the frequency spectrum information center according to the frequency usage information of the macro eNodeB coexisting with the LTE HeNB, so that the frequency spectrum sharing between the LTE HeNB and the GSM macro eNodeB can be achieved, thereby fully utilizing frequency spectrum resources, and reducing the interference on the GSM macro eNodeB. Moreover, because the available frequencies are calculated by the LTE HeNB, distributed management can be achieved, thereby reducing the load of the frequency spectrum information center.

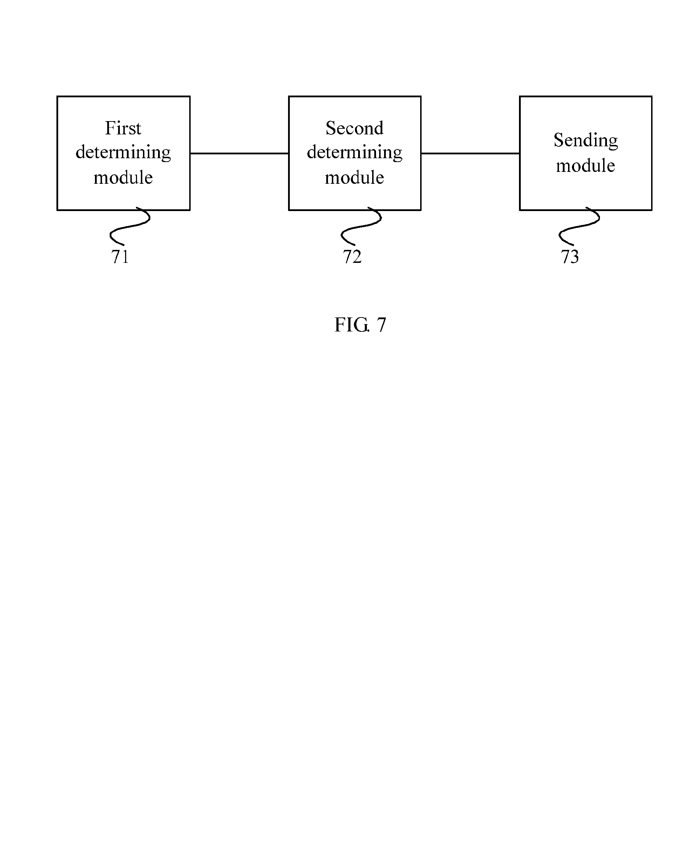

FIG. 7 is a schematic structural diagram of a network device according to a fifth embodiment of the present invention, including a first determining module 71, a second determining module 72, and a sending module 73, where the first determining module 71 is configured to determine available frequencies, where the available frequencies are determined according to frequency usage information of another system network coexisting with the OFDM small cell; the second determining module 72 is configured to determine a usage mode of the available frequencies; and the sending module 73 is configured to notify a terminal served by the OFDM small cell of information about the available frequencies and the usage mode.

The first determining module 71 may specifically be configured to obtain frequency usage information of the macro eNodeB, and obtain the available frequencies according to the frequency usage information; or, obtain the available frequencies from a frequency spectrum information center, where the available frequencies are determined by the frequency spectrum information center according to obtained frequency usage information of the macro eNodeB.

Further, the first determining module 71 may specifically be configured to determine that all frequencies used by the other system network are a set of preliminarily available frequencies; scan all frequencies or only broadcasting channel frequencies in the set of preliminarily available frequencies, or scan all frequencies or only broadcasting channel frequencies used by another system macro eNodeB covering the OFDM small cell and a macro eNodeB adjacent to the other system macro eNodeB, measure a reception level, and obtain an edge reception level of the OFDM small cell according to the reception level; and delete unavailable frequencies from the set of preliminarily available frequencies to obtain the available frequencies of the OFDM small cell, where the unavailable frequencies are frequencies when the edge reception level of the OFDM small cell is equal to or greater than an edge coverage level of the other system network.

Alternatively, the first determining module 71 may specifically be configured to determine that all frequencies used by the other system network are a set of preliminarily available frequencies; scan, at an initial frequency hopping time point, all frequencies or only broadcasting channel frequencies in the set of preliminarily available frequencies, or scan all frequencies or only broadcasting channel frequencies used by another system macro eNodeB covering the OFDM small cell and a macro eNodeB adjacent to the other system macro eNodeB, measure a reception level, and obtain an edge reception level of the OFDM small cell according to the reception level; determine related cells, where the related cells are cells including a set of unavailable frequencies, where the unavailable frequencies are frequencies when the edge reception level of the OFDM small cell is greater than or equal to an edge coverage level of the other system network; and delete, at each frequency hopping time point, frequencies used by the related cells at the frequency hopping time point from the set of preliminarily available frequencies, so as to obtain the available frequencies of the OFDM small cell.

In addition, the second determining module 72 may specifically be configured to determine that a usage mode based on frequency spectrum blocks is adopted, where each frequency spectrum block includes unavailable frequencies, and the adopting the usage mode based on frequency spectrum blocks includes: setting a protection band at two sides of the unavailable frequencies in the frequency spectrum block, where the protection band is not configured to transmit data of the OFDM small cell; or, setting a filter at the unavailable frequencies in the frequency spectrum block, so that data transmitted through the unavailable frequencies is filtered out.

Alternatively, the second determining module 72 may specifically be configured to determine that a usage mode based on frequency spectrum sub-blocks is adopted, where each frequency spectrum sub-block is available frequencies, and the adopting the usage mode based on frequency spectrum sub-blocks includes: determining that a part between two available frequencies in a frequency spectrum block is a frequency spectrum sub-block, and transmitting data in a unit of the frequency spectrum sub-block.

In addition, the sending module 73 may specifically be configured to notify the terminal of the information about the available frequencies and the usage mode through a system broadcast message or a resource scheduling message.

The network device in this embodiment includes, but is not limited to, a small cell of an LTE system, such as an LTE HeNB, an LTE relay, an LTE PICO, and an LTE Backhaul, or a small cell of a WiMAX system, such as a WiMAX PICO and a WiMAX Femto.

In this embodiment, an OFDM small cell obtains available frequencies, and the available frequencies are determined according to frequency usage information of another system network coexisting with the OFDM small cell, so that the frequency spectrum sharing between the OFDM small cell and the other system network can be achieved, thereby fully utilizing frequency spectrum resources, and reducing the interference on a macro eNodeB.

Definitely, in the foregoing embodiments, part of the frequency spectrum of the GSM system may be allocated to the LTE HeNB for use, for example, 5 MHz of the GSM system is allocated to the LTE HeNB for use. Or, the GSM macro eNodeB reserves n carrier frequencies. The n reserved carrier frequencies form a buffer, and the GSM network allocates frequencies except the buffer to the LTE HeNB for use. When GSM terminals are seriously interfered by the LTE HeNB, the GSM terminals may be dispatched to the buffer to avoid interference.

It may be understood that, related features in the method and device may be referenced mutually. In addition, "first" and "second" in the preceding embodiments are configured to distinguish embodiments, but do not represent superiority or inferiority of all embodiments.

A person skilled in the art should understand that all or a part of the steps according to the embodiments may be implemented by a program instructing relevant hardware. The program may be stored in a computer readable storage medium. When the program is run, the steps of the method according to the embodiments are performed. The storage medium may be any medium that is capable of storing program codes, such as a ROM, a RAM, a magnetic disk or an optical disk.

Finally, it should be noted that the above embodiments are merely provided for describing the technical solutions of the present invention, but not intended to limit the present invention. It should be understood by a person skilled in the art that although the present invention has been described in detail with reference to the embodiments, modifications can be made to the technical solutions described in the embodiments, or equivalent replacements can be made to some technical features in the technical solutions, as long as such modifications or replacements do not cause the essence of corresponding technical solutions to depart from the spirit and scope of the technical solutions according to the embodiments of the present invention.

## Claims

1. A method for frequency spectrum sharing between an OFDM small cell and another system network, comprising:
determining, by an OFDM small cell, available frequencies, wherein the available frequencies are determined according to frequency usage information of another system network coexisting with the OFDM small cell;
determining, by the OFDM small cell, a usage mode of the available frequencies; and
notifying, by the OFDM small cell, a terminal served by the OFDM small cell of information about the available frequencies and the usage mode.

2. The method according to claim 1, wherein the determining available frequencies comprises:
obtaining, by the OFDM small cell, the frequency usage information of the other system network, and determining the available frequencies according to the frequency usage information;
or,
obtaining, by the OFDM small cell, the available frequencies from a frequency spectrum information center, wherein the available frequencies are determined by the frequency spectrum information center according to obtained frequency usage information of the other system network.

3. The method according to claim 2, wherein the obtaining the frequency usage information of the other system network comprises:
obtaining the frequency usage information from pre-configured information or from a network management system;
or,
obtaining the frequency usage information from the frequency spectrum information center;
or,
obtaining the frequency usage information by communicating with the other system network.

4. The method according to claim 2, wherein when the other system network uses a non-frequency hopping mode or a baseband frequency hopping mode, the determining the available frequencies according to the frequency usage information comprises:
determining that all frequencies used by the other system network are a set of preliminarily available frequencies;
scanning all frequencies or only broadcasting channel frequencies in the set of preliminarily available frequencies, or, scanning all frequencies or only broadcasting channel frequencies used by another system macro eNodeB covering the OFDM small cell and a macro eNodeB adjacent to the other system macro eNodeB, measuring a reception level, and obtaining an edge reception level of the OFDM small cell according to the reception level; and
deleting unavailable frequencies from the set of preliminarily available frequencies to obtain the available frequencies of the OFDM small cell, wherein the unavailable frequencies are frequencies when the edge reception level of the OFDM small cell is greater than or equal to an edge coverage level of the other system network.

5. The method according to claim 2, wherein when the macro eNodeB uses a radio frequency hopping mode, the determining the available frequencies according to the frequency usage information comprises:
determining that all frequencies used by the other system network are a set of preliminarily available frequencies;
scanning, at an initial frequency hopping time point, all frequencies or only broadcasting channel frequencies in the set of preliminarily available frequencies, or, scanning all frequencies or only broadcasting channel frequencies of another system macro eNodeB covering the OFDM small cell and a macro eNodeB adjacent to the other system macro eNodeB, measuring a reception level, and obtaining an edge reception level of the OFDM small cell according to the reception level; determining a related cell, wherein the related cell is a cell comprising a set of unavailable frequencies, and the unavailable frequencies are frequencies when the edge reception level of the OFDM small cell is greater than or equal to an edge coverage level of the other system network; and
deleting, at each frequency hopping time point, frequencies used by the related cell at the frequency hopping time point from the set of preliminarily available frequencies, so as to obtain the available frequencies of the OFDM small cell.

6. The method according to claim 1, wherein the determining a usage mode of the available frequencies comprises:
determining that a usage mode based on frequency spectrum blocks is adopted, wherein each frequency spectrum block comprises unavailable frequencies, and the adopting the usage mode based on frequency spectrum blocks comprises:
setting a protection band at two sides of the unavailable frequencies in the frequency spectrum block, wherein the protection band is not configured to transmit data of the OFDM small cell;
or,
setting a filter at the unavailable frequencies in the frequency spectrum block, so that data transmitted through the unavailable frequencies is filtered out.

7. The method according to claim 1, wherein the determining a usage mode of the available frequencies comprises:
determining that a usage mode based on frequency spectrum sub-blocks is adopted, wherein each frequency spectrum sub-block is available frequencies, and the adopting the usage mode based on frequency spectrum sub-blocks comprises:
determining that a part between two available frequencies in a frequency spectrum block is a frequency spectrum sub-block, and transmitting data in a unit of the frequency spectrum sub-block.

8. The method according to claim 1, wherein the notifying a terminal served by the OFDM small cell comprises:
notifying the terminal through a system broadcast message or a resource scheduling message.

9. A network device, comprising:
a first determining module, configured to determine available frequencies, wherein the available frequencies are determined according to frequency usage information of another system network coexisting with the OFDM small cell;
a second determining module, configured to determine a usage mode of the available frequencies; and
a sending module, configured to notify a terminal served by the OFDM small cell of information about the available frequencies and the usage mode.

10. The device according to claim 9, wherein the first determining module is specifically configured to:
obtain the frequency usage information of the other system network, and obtaining the available frequencies according to the frequency usage information;
or,
obtain the available frequencies from a frequency spectrum information center, wherein the available frequencies are determined by the frequency spectrum information center according to obtained frequency usage information of the other system network.

11. The device according to claim 10, wherein the first determining module is further specifically configured to:
determine that all frequencies used by the other system network are a set of preliminarily available frequencies;
scan all frequencies or only broadcasting channel frequencies in the set of preliminarily available frequencies, or, scan all frequencies or only broadcasting channel frequencies used by another system macro eNodeB covering the OFDM small cell and a macro eNodeB adjacent to the other system macro eNodeB, measure a reception level, and obtain an edge reception level of the OFDM small cell according to the reception level; and
delete unavailable frequencies from the set of preliminarily available frequencies to obtain the available frequencies of the OFDM small cell, wherein the unavailable frequencies are frequencies when the edge reception level of the OFDM small cell is greater than or equal to an edge coverage level of the other system network.

12. The device according to claim 10, wherein the first determining module is further specifically configured to:
determine that all frequencies used by the other system network are a set of preliminarily available frequencies;
scan, at an initial frequency hopping time point, all frequencies or only broadcasting channel frequencies in the set of preliminarily available frequencies, or, scan all frequencies or only broadcasting channel frequencies used by another system macro eNodeB covering the OFDM small cell and a macro eNodeB adjacent to the other system macro eNodeB, measure a reception level, and obtain an edge reception level of the OFDM small cell according to the reception level; determine a related cell, wherein the related cell is an adjacent cell comprising a set of unavailable frequencies, and the unavailable frequencies are frequencies when the edge reception level of the OFDM small cell is greater than or equal to an edge coverage level of the other system network; and
delete, at each frequency hopping time point, frequencies used by the related cell at the frequency hopping time point from the set of preliminarily available frequencies, so as to obtain the available frequencies of the OFDM small cell.

13. The device according to claim 9, wherein the second determining module is specifically configured to determine that a usage mode based on frequency spectrum blocks is adopted, wherein each frequency spectrum block comprises unavailable frequencies, and the adopting the usage mode based on frequency spectrum blocks comprises:
setting a protection band at two sides of the unavailable frequencies in the frequency spectrum block, wherein the protection band is not configured to transmit data of the OFDM small cell;
or,
setting a filter at the unavailable frequencies in the frequency spectrum block, so that data transmitted through the unavailable frequencies is filtered out.

14. The device according to claim 9, wherein the second determining module is specifically configured to determine that a usage mode based on frequency spectrum sub-blocks is adopted, wherein each frequency spectrum sub-block is available frequencies, and the adopting the usage mode based on frequency spectrum sub-blocks comprises:
determining that a part between two available frequencies in a frequency spectrum block is a frequency spectrum sub-block, and transmitting data in a unit of the frequency spectrum sub-block.

15. The device according to claim 9, wherein the sending module is specifically configured to notify the terminal of the information about the available frequencies and the usage mode through a system broadcast message or a resource scheduling message.
